Europäisches Patentamt

European Patent Office

Office européen des brevets

(11) Publication number: **0 054 425**
**B1**

## (12) EUROPEAN PATENT SPECIFICATION

(45) Date of publication of patent specification: **06.11.85**

(21) Application number: **81305860.9**

(22) Date of filing: **14.12.81**

(51) Int. Cl.⁴: **A 01 K 89/01**

(54) **Fishing reel.**

(30) Priority: **16.12.80 JP 181277/80 u**
**16.12.80 JP 181278/80 u**

(43) Date of publication of application:
**23.06.82 Bulletin 82/25**

(45) Publication of the grant of the patent:
**06.11.85 Bulletin 85/45**

(84) Designated Contracting States:
**DE FR GB IT SE**

(56) References cited:
**DE-A-3 014 642**
**GB-A- 882 777**
**GB-A-1 582 263**
**US-A-3 967 791**

(73) Proprietor: **SHIMANO INDUSTRIAL COMPANY
LIMITED
77, 3-cho Oimatsu-cho Sakai-shi
Osaka (JP)**

(72) Inventor: **Nakajima, Hideki
Seiunryo, 874-1 Fukainaka-machi
Sakai-shi Osaka (JP)**

(74) Representative: **Szczuka, Jan Tymoteusz et al
Cruikshank & Fairweather 19 Royal Exchange
Square
Glasgow G1 3AE Scotland (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 054 425 B1

## Description

This invention relates to a fishing reel, and more particularly a fishing reel comprising a reel body having a front wall and side walls, a rotary frame disposed in front of the front wall of said reel body and having a tubular shaft rotatably mounted in said reel body, a spool disposed in front of said front wall of said reel body and having a spool shaft, an operating handle mounted on one of said side walls of said reel body, a drive transmission means for transmitting rotational drive from said handle to provide rotation of said rotary frame and reciprocal movement of said spool shaft axially thereof, said rotary frame having a support plate, a generally tubular body, and a pair of support arms, said tubular body having therein an inner space and said drive transmission means including an obliquely extending groove and an engagement member disposed for guided engagement with the groove.

In general such fishing reels in which the fishing line is wound onto the spool as described above, are known as spinning reels and are known in the art. In detail, such a spinning reel usually has a generally box shaped reel body comprising a front wall and side walls. A tubular shaft and the spool shaft are supported in a through bore provided in the front wall and project outwardly therefrom, the tubular shaft carrying at one axial end the rotary frame, and the spool shaft carrying at its corresponding axial end the spool. A handle shaft mounting a handle is supported in a side wall at right angles to the tubular shaft and spool shaft. The reel body houses a drive transmission means for transmitting rotation of the handle to the rotary frame through the tubular shaft.

The drive transmission means usually comprises a main gear wheel supported on the handle shaft and a pinion on the tubular shaft, so that the pinion engages with the main gear wheel to amplify the rotational movement of the handle and transmit it to the rotary frame.

At the same time in order to reciprocate the spool shaft longitudinally of the reel body simultaneously with the rotation of rotary frame, the drive transmission means includes a reciprocal drive means mechanism provided inside the reel body. The reciprocal drive means usually comprises an obliquely extending groove on the outer surface of part of the spool shaft inside the reel body and an engagement member is provided on part of the tubular shaft inside the reel body, the engagement member engaging said obliquely extending groove to allow the spool shaft to reciprocate axially and longitudinally of the reel body at the same time as the tubular shaft is rotated.

US—A—3 967 791 discloses a fishing reel body having a front wall and side walls, a rotary frame disposed in front of the front wall of said reel body and having a tubular shaft rotatably mounted in said reel body, a spool disposed in front of said front wall of said reel body and having a spool shaft, an operating handle mounted on one of said side walls of said reel body, a drive transmission means for transmitting rotational drive from said handle to provide rotation of said rotary frame and reciprocal movement of said spool shaft axially thereof, said rotary frame having a support plate, a generally tubular body and a pair of support arms, said tubular body having therein an inner space and said drive transmission means including an obliquely extending groove and an engagement member disposed for guided engagement with said groove.

The reciprocal drive means and the rest of the drive transmission are housed within the reel body and occupy a substantial amount of space therein making the reel body relatively large, heavy, and expensive to produce.

With the conventional form of the above type of reciprocal drive means the spool shaft is reciprocated more smoothly than in the case of a reciprocal drive means using a link which is pivotally connected eccentrically to the main gear wheel, but is, on the other hand, so constructed that each rotation of the main gear wheel is associated with one reciprocation of the spool shaft so that rotation of the rotary frame is synchronized with reciprocal movement of the spool shaft. As a result, the rotation of the rotary frame results in a limitation in line-winding position along the length of the spool, which gives rise to a problem in that the line cannot be wound uniformly along the full axial length of the spool body.

It is an object of the present invention to avoid or minimize one or more of the above disadvantages.

The present invention provides a fishing reel comprising a reel body having a front wall and side walls, a rotary frame disposed in front of the front wall of said reel body and having a tubular shaft rotatably mounted in said reel body, a spool disposed in front of said front wall of said reel body and having a spool shaft, an operating handle mounted on one of said side walls of said reel body, a drive transmission means for transmitting rotational drive from said handle to provide rotation of said rotary frame and reciprocal movement of said spool shaft axially thereof, said rotary frame having a support plate, a generally tubular body, and a pair of support arms, said tubular body having therein an inner space and said drive transmission means including an obliquely extending groove and an engagement member disposed for guided engagement with said groove characterized in that the groove is provided on the outer surface of the spool shaft and in that said engagement member is disposed within said inner space for rotation by the drive transmission means together with said rotary frame.

Thus the present invention makes use of an otherwise dead space within the rotary frame mounted before the front wall of the reel body to house a reciprocal drive means, thereby permitting a significant reduction in the overall size of the reel body leading also to significant reductions in weight and manufacturing cost and complexity.

Preferably the rotary frame of the fishing reel of the invention comprises a support plate disposed on the tubular shaft, a generally tubular body, and a pair of support arms carrying a bail arm. The spool comprises a generally tubular body and a pair of flanges. In a typical construction, the spool body has an inner diameter larger than the outer diameter of the tubular body of the rotary frame and is sleeved onto the cylindrical body, defining an annular space therebetween. The engagement member of the reciprocal drive means is disposed within the inner space inside the rotary frame body which in turn is inside the spool body and thus the reciprocal drive means need not be disposed inside the reel body as in conventional designs so that the the reel body can be made significantly smaller and thereby more lightweight and inexpensive to produce.

The engagement member of the reciprocal drive means may be disposed on the axial end of the rotary frame tubular shaft which projects outwardly from the front wall of the reel body for rotational movement therewith, but is preferably driven by a drive transmission shaft provided separately from the rotary frame tubular shaft.

In this case, a main gear wheel of the drive transmission means is conveniently provided with separate second drive transmission teeth which may be disposed radially inwardly or outwardly of said first drive transmission teeth which drivingly engage a first pinion on the tubular shaft, the drive transmission shaft being provided with a second pinion in driven engagement with said second drive transmission teeth, thereby changing, desirably reducing, the rotational speed of the drive transmission shaft relative to that of the rotary frame tubular shaft. Hence, the line can be wound more uniformly onto the spool because the spool is moved axially and longitudinally of the reel body independently of the rotation of the rotary frame and without full synchronization therewith.

Further preferred features and advantages of the invention will appear from the following detailed description given by way of example of a preferred embodiment illustrated with reference to the accompanying drawings in which:

Fig. 1 is a longitudinally sectioned side view of an embodiment of a fishing reel of the invention;

Fig. 2 is a partially sectional plan view of the reel of Fig. 1; and

Fig. 3 is a transverse sectional view of an engagement member of the reel of Figs. 1 and 2, shown on an enlarged scale.

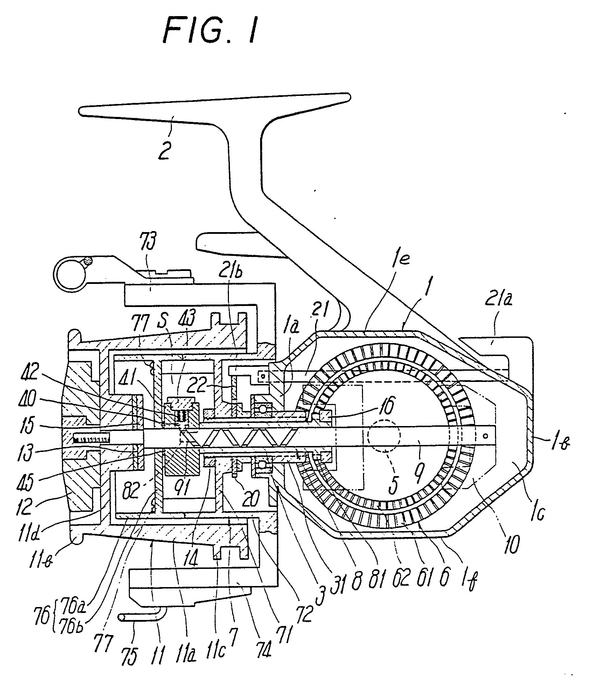

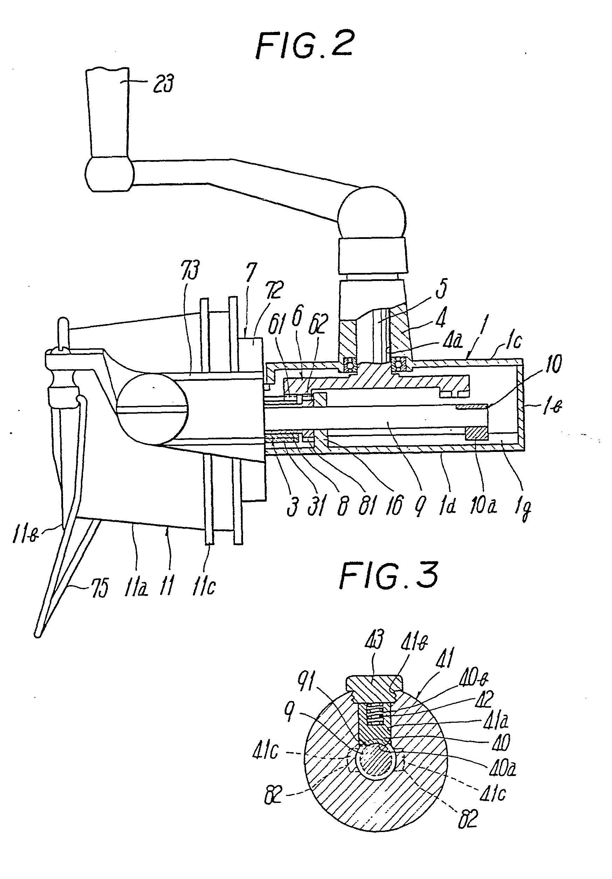

Figs. 1 and 2 show a fishing reel of the invention which comprises a generally box shaped reel body 1 having a front wall 1a, a rear wall 1b, a pair of side walls 1c and 1d, an upper wall 1e, and a lower wall 1f. The upper wall 1e is provided with a mounting leg 2 for a fishing rod (not shown), the front wall 1a having a through bore in which is rotatably supported a tubular shaft 3, the side wall 1c being provided with a tubular bearing means 4 defining a shaft receiving bore 4a at right angles to the axis of the tubular shaft 3, said bore 4a rotatably supporting a handle shaft 5 at whose innermost end is provided a main gear wheel 6.

One axial end of the tubular shaft 3 is disposed inside the reel body 1 whilst its other axial end projects outwardly from the front wall 1a of said reel body 1. At said one axial end is provided a first pinion 31 engageable with first drive transmission teeth 61 provided at a peripheral portion of one side of the main gear wheel 6, whilst on said other axial end is secured a rotary frame 7.

The fishing reel shown in Figs. 1 and 2 has a drive transmission shaft 8 formed separately from the tubular shaft 3, which transmission shaft 8 operates a reciprocal drive means for providing reciprocal movement of a spool to be hereinafter described. The association shaft 8 is hollow and is longer than the tubular shaft 3, and is rotatably supported inside the tubular shaft 3 via a metal touch. A spool shaft 9 is rotatably supported inside the hollow association shaft 8 so as to be axially (longitudinally) movable inside the reel body 1.

The drive transmission shaft 8 extends outwardly from either end of the tubular shaft 3, a second pinion 81 being provided at one axial end of the transmission shaft 8 disposed inside the reel body 1, and an engagement member of a reciprocal drive mechanism (further described hereinbelow) being provided at the other axial end which projects outwardly from the reel body 1. Second drive transmission teeth 62 are provided at said peripheral portion of the main gear wheel 6 but radially inwardly of the first drive transmission teeth 61, so that the second pinion 81 engages with the second drive transmission teeth 62 to drive the transmission shaft 8 following the rotation of master gear 6.

The number of second drive transmission teeth 62 is equal to the number of first drive transmission teeth 61 though the pitch of the latter is somewhat smaller than in the case of the former. The second pinion 81 has a larger number of teeth than the first pinion 31, so that the transmission shaft 8 rotates at a lower speed than the tubular shaft 3.

The spool shaft 9 is provided at an axially intermediate portion of its outer cylindrical surface with an obliquely extending groove 91, and at its axial end which is disposed inside the reel body 1 with a slider 10 which restrains the spool shaft 9 against rotation whilst permitting axial movement thereof. At its other axial end which projects outwardly from the reel body 1 the spool shaft is connected to a spool 11.

The slider 10 is arranged to move together with the spool shaft 9 axially thereof, whilst restraining rotation thereof by means of a protuberance or nose 10a provided at one side of the slider 10 to extend generally radially of the spool shaft 9 and engage in a guide groove 1g on an inside surface of the side wall 1d of the reel body 1 as shown in

Fig. 2 and extending parallel to the spool shaft 9.

The rotary frame 7, as shown in Fig. 1, is provided with a support plate 71 having a central boss, a tubular body 72 extending around the outer periphery of the support plate 71, and a pair of support arms 73 and 74 which pivotally support a bail arm 75. A generally cylindrical cap 76 comprising a support plate 76*b* and a tubular portion 76*a* extending in continuation of the axially outward end of the tubular rotary frame body 72, is secured to the rotary frame 7 by means of a plurality of screw threaded bolts 77 to thereby define an inner space *S* between and enclosed by the cylindrical body 72 and the tubular portion 76*a* of the cap 76.

The cap 76, which is used for closing the space *S*, is not indispensable, but helps to keep the space *S* dustproof and watertight.

The spool 11 comprises a generally tubular spool body 11*a* with a pair of axially spaced annular flanges 11*b* and 11*c*. The spool body 11*a* has an inner diameter larger than the outer diameter of the tubular body 72 of the rotary frame 7 and fits onto said tubular body 72 as shown in Fig. 1.

The spool body 11*a* has at its forward axial end a support plate 11*d* having a central boss which fits onto the respective axial end of the spool shaft 9. A dragging thumb nut 12 screwthreadedly engages said axial end of the spool shaft 9 to support the boss so that the spool 11 can be subjected to a desired rotational resistance by means of a friction plate 13 which is secured in position by a retainer plate 15.

In addition a lock nut 14 is provided for fixing the rotary frame 7 to the tubular shaft 3, and a lug 16 for supporting the end of the transmission shaft 8 disposed inside the reel body 1, said lug 16 being formed integrally with the side wall 1*d* of the reel body. There is also provided a stop gear 20 for supporting the tubular shaft 3 and a control rod 21 rotatably mounted on the reel body 1. The control rod 21 has a knob 21*a* at one end and a cam 21*b* at its other end, a stop pawl 22 being provided between the cam 21*b* and the stop gear 20 for engagement with the stopper gear to prevent reverse rotation of the rotary frame 7 as in a ratchet wheel mechanism whilst being disengageable from said stop gear 20 to permit the rotary frame 7 to rotate either normally or in the reverse direction. Finally, a handle 23 is provided at the free end of the handle shaft 5.

In a fishing reel of the invention with the above-described form of construction a reciprocal drive mechanism comprises the obliquely extending groove 91 on the outer surface of the spool shaft 9 and an engagement member 40 which engages said groove 91, said engagement member 40 being housed within the space *S* inside the rotary frame 7 and being rotatable together therewith.

Fig. 3 shows the engagement member 40 in more detail. It comprises a stem having at one end thereof a tapered engagement portion 40*a* and at its other end a recess 40*b*. A ring-shaped holder 41 has a central inner bore portion 41*a* extending radially outwardly of the spool shaft 9 and a threaded increased diameter outer bore portion 41*b*, extending in continuation of the inner bore portion 41*a*. The engagement member 40 is slidably mounted inside the inner bore portion 41*a*, a retainer cap 43 being screwed into the threaded outer bore portion 41*b*, a spring 42 being disposed inside the engagement member end recess 40*b*, so as to urge the engagement member 40 away from the cap 43 into engagement with the obliquely extending spool shaft groove 91.

As may be seen in Fig. 1 the holder 41 is also in driving connection with the transmission shaft 8. Specifically the holder 41 has a plurality of insertion recesses 41*c* for receiving respective axially extending projections 82 on the axial end of the transmission shaft 8 which projects outwardly of the reel body 1. A washer 45, as shown in Fig. 1, is interposed between the holder 41 and the support plate 76*b* of the cap 76, whereby the cap 76 of said rotary frame 7 restrains the holder 41 against axial movement thereof.

In use of the above described reel an angler turns the handle 23 to wind the line onto the spool 11, the rotational force applied to the handle 23 being transmitted to the rotary frame 7 via the handle shaft 5, first drive transmission teeth 61 of the main gear wheel 6, first pinion 31, and tubular shaft 3, to rotate the rotary frame 7, the line being guided onto the spool body 11*a* by the bail arm 75 and wound around the spool body 11*a*. The rotational force is also transmitted to the engagement member 40 via the second drive transmission teeth 62 of the main gear wheel 6, second pinion 81, transmission shaft 8, and holder 41, so that the engagement member 40 rotates around the spool shaft 9 while remaining in engagement with the obliquely extending groove 91 on the spool shaft 9, thereby causing the spool shaft 9 to move axially together with the spool 11 and longitudinally of the reel body 1. The line can be wound onto the full width of the spool body 11*a* of spool 11 due to the axial displacement of the position at which the line is wound onto the spool body 11*a*. The smaller pitch of the second drive transmission teeth 62 results in rotation of the transmission shaft 8 and hence the engagement member 40, at a lower speed than the rotary frame 7, thereby making it possible to wind the line more uniformly onto the spool 11.

As an alternative though, the engagement member 40 could be drivenly connected to the tubular shaft 3 without the use of a separate transmission shaft 8.

In any event, the above described reciprocal drive mechanism is housed in the space *S* within the rotary frame 7, thereby making use of this otherwise dead space present therein, whereby the reel body, in comparison with conventional designs in which the reciprocal drive mechanism is housed inside the reel body, can be made to be relatively small, lightweight, and inexpensive to produce.

## Claims

1. A fishing reel comprising a reel body (1) having a front wall (1a) and side walls (1c, 1d), a rotary frame (7) disposed in front of the front wall (1a) of said reel body (1) and having a tubular shaft (3) rotatably mounted in said reel body (1), a spool (11) disposed in front of said front wall (1a) of said reel body (1) and having a spool shaft (9), an operating handle (23) mounted on one of said walls (1c) of said reel body (1), a drive transmission means (61, 31, 62, 81) for transmitting rotational drive from said handle (23) to provide rotation of said rotary frame (7) and reciprocal movement of said spool shaft (9) axially thereof, said rotary frame (7) having a support plate (71), a generally tubular body (72) and a pair of support arms (73, 74), said tubular body (72) having therein an inner space (S) and said drive transmission means including an obliquely extending groove (91) and an engagement member (40) disposed for guided engagement with said groove (91), characterized in that the groove is provided on the outer surface of said spool shaft and in that said engagement member (40) is disposed within said inner space (S) for rotation by the drive transmission means with said rotary frame (7).

2. A fishing reel according to Claim 1, wherein said spool (11) has an annular body (11a) and a pair of spaced apart annular flanges (11b, 11c), said spool body (11a) having an inner diameter larger than the outer diameter of said generally tubular body (72) of said rotary frame (7) and being disposed at least partly around said rotary frame tubular body (72) radially outwardly of said tubular body (72).

3. A fishing reel according to Claim 1 or 2, wherein said rotary frame (7) has a cap (76) substantially equal in diameter to said tubular body (72) thereof, said cap (76) closing said inner space (S).

4. A fishing reel according to any one of Claims 1 to 3 wherein said engagement member (40) has a holder (41), said holder (41) being rotatably supported on said spool shaft (9).

5. A fishing reel according to any one of Claims 1 to 4, wherein said drive transmission means comprises a handle shaft (5) in driven engagement with said operating handle (23), a main gear wheel (6) disposed on said handle shaft (5) and having first drive transmission teeth (61) in driving engagement with a first pinion (31) and disposed on said rotary frame tubular shaft (3) and second drive transmission teeth (62) in driving engagement with a second pinion (81) disposed on a drive transmission shaft (8) in driving engagement with said engagement member (40) of said reciprocal movement drive transmission means (40, 91).

6. A fishing reel according to Claim 5, wherein said second drive transmission teeth (62) of said main gear wheel (6) are disposed radially inwardly of said first drive transmission teeth, said transmission shaft (8) being disposed inside said rotary frame tubular shaft (3).

7. A fishing reel according to Claim 6, wherein said second drive transmission teeth (62) have a smaller tooth pitch than that of said first drive transmitting teeth, and said second pinion (81) has a larger number of teeth than said first pinion (31) so that said transmission shaft (8) rotates at a lower speed than said tubular shaft (3).

8. A fishing reel according to any one of Claims 5 to 7 wherein said rotary frame tubular shaft (3) and drive transmission shaft (8) are mounted concentrically with respect to each other and with respect to the spool shaft (9) on said spool shaft (9).

9. A fishing reel according to Claim 8 wherein the rotary frame tubular shaft (3) and drive transmission shaft (8) are disposed around a portion of said spool shaft (9) bearing said obliquely extending groove (91).

10. A fishing reel according to Claim 8 or Claim 9 wherein the drive transmission shaft (8) is disposed radially between the rotary frame tubular shaft (3) and the spool shaft (9).

11. A fishing reel according to any one of Claims 8 to 10 wherein said drive transmission shaft (8) extends into said inner space (S) of the rotary frame tubular body (72) and is drivingly connected to the engagement member (40) therein.

## Revendications

1. Un moulinet de pêche, comprenant un corps de moulinet (1) présentant une paroi avant (1a) et des parois latérales (1c, 1d), un cadre rotatif (7) disposé en face de la paroi avant (1a) du dit corps de moulinet (1) et présentant un arbre tubulaire (3) pouvant tourner dans le dit corps de moulinet (1), une bobine (11) disposée en face de la dite paroi avant (1a) du dit corps de moulinet (1) et présentant un arbre de bobine (9), une manivelle de commande (23) montée sur l'une des dites parois (1c) du dit corps de moulinet (1), des moyens (61, 31, 62, 81) de transmission du mouvement pour transmettre le mouvement de rotation depuis la dite manivelle (23) afin d'assurer la rotation du dit cadre rotatif (7) et le mouvement réciproque du dit arbre de bobine (9) selon son axe, le dit cadre rotatif (7) comportant une plaque de support (71), un corps (72) généralement tubulaire et une paire de bras de support (73, 74), le dit corps tubulaire (72) présentant un espace intérieur (S) et les dits moyens de transmission du mouvement comprenant une rainure (91) orientée obliquement et une pièce (40) s'engageant dans la dite rainure (91) pour être guidée par elle, caractérisé en ce que la rainure est prévue dans la surface extérieure du dit arbre de bobine et en ce que la dite pièce (40) à engagement est disposée dans le dit espace intérieur (S) pour être mise en rotation, par les moyens de transmission du mouvement, avec le dit cadre rotatif (7).

2. Un moulinet de pêche suivant la revendication 1, dans lequel la dite bobine (11) présente un corps annulaire (11a) et une paire de colle-

rettes annulaires (11*b*, 11*c*) espacées l'une de l'autre, le dit corps de bobine (11*a*) présentant un diamètre intérieur plus grand que le diamètre extérieur du dit corps (72) généralement tubulaire du dit cadre rotatif (7) et étant disposé au moins partiellement autour du dit corps tubulaire (72) du cadre rotatif, radialement vers l'extérieur du dit corps tubulaire (72).

3. Un moulinet de pêche suivant la revendication 1 ou 2, dans lequel le dit cadre rotatif (7) comporte un capot (76) dont le diamètre est substantiellement égal à celui du dit corps tubulaire (72) de ce cadre, le dit capot (76) fermant le dit espace intérieur (S).

4. Un moulinet de pêche suivant l'une ou l'autre des revendications 1 à 3, dans lequel la dite pièce (40) à engagement comporte un support (41), le dit support (41) étant appuyé de façon rotative sur le dit arbre de bobine (9).

5. Un moulinet de pêche suivant l'une ou l'autre des revendications 1 à 4, dans lequel les dits moyens de transmission du mouvement comprennent un arbre de manivelle (5) en prise avec la dite manivelle de commande (23), une roue dentée principale (6) montée sur le dit arbre de manivelle (5) et présentant une première denture (61) de transmission du mouvement en prise avec un premier pignon (31) monté sur le dit arbre tubulaire (3) du cadre rotatif et une seconde denture (62) de transmission du mouvement en prise avec un second pignon (81) monté sur un arbre de transmission du mouvement (8) en prise avec la dite pièce (40) à engagement des dits moyens (40, 91) de transmission du mouvement réciproque.

6. Un moulinet de pêche suivant la revendication 5, dans lequel la dite seconde denture (62) de transmission du mouvement de la dite roue dentée principale (6) est disposée radialement vers l'intérieur de la dite première denture de transmission du mouvement, le dit arbre de transmission (8) étant disposé à l'intérieur du dit arbre tubulaire (3) du cadre rotatif.

7. Un moulinet de pêche suivant la revendication 6, dans lequel la dite seconde denture (62) de transmission du mouvement présente un pas inférieur à celui de la dite première denture de transmission du mouvement, et en ce que le dit second pignon (81) comporte un nombre de dents supérieur à celui du dit premier pignon (31) de sorte que le dit arbre de transmission (8) tourne à une vitesse inférieure à celle du dit arbre tubulaire (3).

8. Un moulinet de pêche suivant l'une ou l'autre des revendications 5 à 7, dans lequel le dit arbre tubulaire (3) du cadre rotatif et le dit arbre de transmission du mouvement (8) sont montés concentriquement l'un par rapport à l'autre et par rapport à l'arbre de bobine (9) sur le dit arbre de bobine (9).

9. Un moulinet de pêche suivant la revendication 8, dans lequel l'arbre tubulaire (3) du cadre rotatif et l'arbre de transmission du mouvement (8) sont disposés autour d'une portion du dit arbre de bobine (9) portant la dite nervure (91) orientée obliquement.

10. Un moulinet de pêche suivant la revendication 8 ou la revendication 9, dans lequel l'arbre de transmission du mouvement (8) est disposé radialement entre l'arbre tubulaire (3) du cadre rotatif et l'arbre de bobine (9).

11. Un moulinet de pêche suivant l'une ou l'autre des revendications 8 à 10, dans lequel le dit arbre de transmission du mouvement (8) s'étend à l'intérieur du dit espace intérieur (S) du corps tubulaire (72) du cadre rotatif et en ce qu'il est mécaniquement connecté à la pièce (40) à engagement qui s'y trouve.

**Patentansprüche**

1. Angelrolle mit einem Rollenkörper (1) mit einer Stirnwand (1a) und Seitenwänden (1c, 1d), einem Rotationsrahmen (7), der vor der Stirnwand (1a) des Rollenkörpers (1) angeordnet ist und eine rohrförmige Welle (3) aufweist, die drehbar im Rollenkörper (1) aufgenommen ist, einer Spule (11), die vor der Stirnwand (1a) des Rollenkörpers (1) liegt und eine Spulenwelle (9) aufweist, einem Betätigungshandgriff (23), der an einer der Wände (1c) des Spulenkörpers (1) befestigt ist, einer Antriebsübertragungseinrichtung (61, 31, 62, 81), die den Rotationsantrieb vom Handgriff (23) überträgt, um eine Drehung des Rotationsrahmens (7) und eine Gegenbewegung der Spulenwelle (9) in axialer Richtung zu bewirken, wobei der Rotationsrahmen (7) eine Halteplatte (71), einen im allgemeinen rohrförmigen Körper (72) und zwei Haltearme (73, 74) aufweist, der rohrförmige Körper (72) einen Innenraum (S) aufweist und die Antriebsübertragungseinrichtung eine schrägliegende Nut (91) aufweist, in der ein Eingriffselement (40) geführt wird, dadurch gekennzeichnet, daß die Nut (91) an der Außenfläche der Spulenwelle angeordnet ist und das Eingriffselement (40) im Raum (S) angeordnet ist, um mit dem Rotationsrahmen (7) durch die Antriebsübertragungseinrichtung gedreht zu werden.

2. Angelrolle nach Anspruch 1, dadurch gekennzeichnet, daß die Spule (11) einen Ringkörper (11a) und zwei im Abstand zueinander liegende Flansche (11b, 11c) aufweist, der Innendurchmesser des Spulenkörpers (11a) größer als der Außendurchmesser des im wesentlichen rohrförmigen Körpers (72) des Rotationsrahmens (7) ist und wenigstens teilweise um den rohrförmigen Körper (72) des Rotationsrahmens (7) radial außerhalb des rohrförmigen Körpers (72) liegt.

3. Angelrolle nach Anspruch 1 oder 2, dadurch gekennzeichnet, daß der Rotationsrahmen (7) eine Kappe (76) mit im wesentlichen gleichen Durchmesser wie der rohrförmige Körper (72), aufweist, die den Innenraum (S) abschließt.

4. Angelrolle nach einem der Ansprüche 1 bis 3, dadurch gekennzeichnet, daß das Eingriffselement (40) einen Halter (41) aufweist, der auf der Spulenwelle (9) drehbar aufgenommen ist.

5. Angelrolle nach einem der Ansprüche 1 bis 4, dadurch gekennzeichnet, daß die Antriebsübertragungseinrichtung besteht aus einer Handgriffswelle (5), die mit dem Betätigungshandgriff im Antriebseingriff steht, einem Hauptzahnrad (6), das auf der Handgriffswelle (5) sitzt und erste Antriebsübertragungszähne (61) aufweist, die mit einem ersten Antriebsrad (31), das auf der rohrförmigen Welle (3) des Rotationsrahmens sitzt, in Eingriff stehen und zweite Antriebsübertragungszähne (62), die mit einem zweiten Antriebsrad (81) in Eingriff stehen, welches auf einer Antriebsübertragungswelle (8) sitzt und mit dem Eingriffselement (40) der Einrichtung (40, 91) zur Übertragung einer Gegenbewegung in Eingriff steht.

6. Angelrolle nach Anspruch 5, dadurch gekennzeichnet, daß die zweiten Antriebsübertragungszähne (61) des Hauptzahnrades (6) in radialer Richtung innerhalb der ersten Antriebsübertragungszähne liegen und die Übertragungswelle (8) innerhalb der rohrförmigen Welle (3) des Rotationsrahmens liegt.

7. Angelrolle nach Anspruch 6, dadurch gekennzeichnet, daß die zweiten Antriebsübertragungszähne (62) eine kleinere Zahnteilung als die ersten Antriebsübertragungszähne aufweist und das zweite Antriebsrad (81) eine größere Anzahl Zähne als das erste Antriebsrad (31) aufweist, so daß die Übertragungswelle (8) mit einer kleineren Geschwindigkeit als die rohrförmige Welle (3) umläuft.

8. Angelrolle nach einem der Ansprüche 5 bis 7, dadurch gekennzeichnet, daß die rohrförmige Welle (3) des Rotationsrahmens und die Antriebsübertragungswelle (7) konzentrisch zueinander und zur Spulenwelle (9) auf dieser angeordnet sind.

9. Angelrolle nach Anspruch 8, dadurch gekennzeichnet, daß die rohrförmige Welle (3) des Rotationsrahmens und die Antriebsübertragungswelle (8) um den Teil der Spulenwelle (9) liegen, in dem sich die schräg liegende Nut (91) erstreckt.

10. Angelrolle nach Anspruch 8 oder 9, dadurch gekennzeichnet, daß die Antriebsübertragungswelle (8) radial zwischen der rohrförmigen Welle (3) des Rotationsrahmens und der Spulenwelle (9) liegt.

11. Angelrolle nach jedem der Ansprüche 8 bis 10, dadurch gekennzeichnet, daß die Antriebsübertragungswelle (8) in den Innenraum (S) der rohrförmigen Welle (72) des Rotationskörpers ragt, wo sie mit dem Eingriffselement (40) treibend verbunden ist.

0 054 425

FIG. I

## FIG.2

## FIG.3